# NEW EUROPEAN PATENT SPECIFICATION

(11) **EP 2 032 352 B2**
(45) Date of publication and mention of the opposition decision: **18.10.2017**
(45) Mention of the grant of the patent: 21.04.2010
(21) Application number: 07766772.3
(22) Date of filing: 18.06.2007
(51) Int. Cl.: B32B 1/08, F16L 11/04

(54) **FLEXIBLE HOSE OF THERMOPLASTIC MATERIAL FREE OF LIQUID PLASTICIZER AGENTS**
FLEXIBLER SCHLAUCH AUS THERMOPLASTISCHEM MATERIAL OHNE FLÜSSIGE WEICHMACHER
TUYAU FLEXIBLE EN MATÉRIAU THERMOPLASTIQUE NE CONTENANT PAS D'AGENTS PLASTIFIANTS LIQUIDES

(30) Priority: 16.06.2006 IT VI20060185
(43) Date of publication of application: 11.03.2009
(73) Proprietor: FITT S.p.A, 36066 Sandrigo (Vicenza) (IT)
(72) Inventor: Mezzalira, Rinaldo, 36066 Ancignano di Sandrigo (IT)
(74) Representative: Autuori, Angelo
(86) International application number: PCT/IB2007/052320
(87) International publication number: WO 2007/144858

(56) References cited:
- EP-A- 1 087 163
- EP-A1- 0 027 708
- DE-A1- 4 320 281
- DE-U1- 20 312 108
- GB-A- 1 431 796
- US-A1- 2003 232 207

## Description

### Field of the invention

This invention finds application in the field of flexible hoses, and particularly relates to a flexible hose of thermoplastic material free of liquid plasticizer agents, particularly for transporting food liquids.

### Background of the invention

Flexible hoses for transporting food liquids are known to be made from a plastic materials added with plasticizer agents, which are designed to improve processability and flexibility of the final product. When hoses are made from a thermoplastic elastomer material, liquid-state plasticizer agents are used, such as mineral oil.

Plasticizer agents are further known to be subjected to the so called "migration" under thermal and/or mechanical stresses, i.e. release into the surrounding environment and/or the transported liquid, thereby involving pollution problems and/or alterations. Furthermore, as a result of migration, the hose stiffens, loses its original flexibility and can crack or even collapse.

The US application US2003/232207 discloses a hose having all the features of the preamble of the independent claim 1. EP 1 087 163 discloses a dairy hose having an inner layer made from a thermoplastic elastomer.

The need has been long felt for a flexible hose of thermoplastic material free of liquid plasticizer agents having high flexibility, similar to a hose having liquid plasticizer agents.

### Summary of the invention

The object of the present invention is to overcome the above drawbacks, by providing a flexible hose that is highly efficient and relatively cost-effective.

A particular object is to provide a flexible hose of thermoplastic material free of liquid plasticizer agents having a good flexibility.

A further object is to provide a hose that does not alter and/or pollute the surrounding environment and/or the transported fluid.

Yet another object of the invention is to provide at flexible hose that is not subject to UV-Induced alterations.

These and other objects, as better explained hereafter, are fulfilled by a flexible hose as defined in claim 1.

Thanks to this particular configuration, the hose of the invention exhibits a good flexibility although it is substantially free of liquid plasticizer agents.

The nearly complete replacement of liquid plasticizer agents with a sufficient amount of elastomer compound to impart a Shore A hardness of 60 to 85 to the second polymer material, allows to fulfill the need that has long been felt in prior art for a flexible hose formed from an elastomer material free of liquid plasticizer agents.

The use of a polymer material substantially free of liquid plasticizer agents further avoids pollution and/or contamination of the surrounding environment and/or the transported liquid. Also, any problem associated to the loss of flexibility and/or stiffening typically occurring in prior art hoses comprising liquid plasticizers will be substantially avoided.

Unless otherwise stated, the term "percentage by weight with respect to a material", as used herein, is meant to designate the dry weight percentage of a compound of interest based on the total dry weight of material in which such compound is present.

The term "polymer materials substantially free of liquid plasticizer agents", as used herein, is meant to designate polymer materials in which the weight percentage of the liquid plasticizer agent with respect to said polymer material is less than 0.1%.

The term "liquid plasticizer agents" as used herein is meant to designate a compound or a mixture of compounds that are in a liquid state at ambient temperature and pressure (T = 20 °C, P = 1 atm).

The second polymer material has a Shore A hardness of 60 SHA to 85, more preferably of about 70.

Conveniently, the elastomer compound may represent 55% to 85%, preferably about 75% by weight, based on the sum of the elastomer compound and the thermoplastic compound.

### Brief description of drawings

Further features and advantages of the invention will be more apparent upon reading the detailed description of a preferred, non-exclusive embodiment of a hose according to the invention, which is described as a non-limiting example with the help of the annexed drawings, in which:
FIG. 1 is a perspective view of one embodiment of the hose according to the invention;
FIG. 2 is a sectional view of the hose of Fig. 1, as taken along a plane II-II.
FIG. 3 is a view of a particular embodiment of the hose according to the invention with the outer layer omitted.

### Detailed description of a preferred embodiment

Referring to the above figures, the hose according to the invention, generally designated by numeral 1, may be advantageously used for transporting fluids, particularly food liquids.

In a preferred, non exclusive embodiment, the hose of the invention is advantageously used for transporting potable irrigation water in outdoor environments, such as a garden or a meadow.

The hose 1 essentially comprises an outer protective layer 2 of a first flexible polymer material A and an inner layer 3 which, in the example as shown in the annexed figures, may be in direct contact with the fluid to be transported, made from a second flexible polymer material B comprising a polyolefin-based thermoplastic compound, preferably selected from the group comprising polypropylenes, polyethylenes or the like, as well as a fibrous reinforcement layer (6) interposed between said outer layer (2) and said inner layer (3). According to the invention, the second polymer material B further comprises an elastomer compound C2 representing such a weight percentage as to impart a Shore A hardness of 60 to 85. Also, the second polymer material B will be selected from polymer materials substantially free of liquid plasticizer agents.

It shall be understood that, besides the thermoplastic compound C1 and the elastomer compound C2, the second polymer material B may include other compounds or mixtures of compounds without departure from the scope as defined in the annexed claims. By way of example and without limitation, the second polymer material B may include a filler compound D, such as, without limitation, calcium carbonate, kaolin or talc, individually or in combinations of two or more thereof, in a suitable weight percent. Conveniently, such weight percentage may be from 5% to 30% based on the total weight of the second polymer material B.

Advantageously, the elastomer compound C2 may be selected from the group comprising SEBS, SEPS, EPD and polyolefin elastomers.

The second polymer material B is selected from the group consisting of polyvinyl chloride (PVC)-free polymer materials, to avoid any dioxin-emission problem associated to incineration of such compound.

A few samples of second polymer materials B, comprising a mixture of an elastomer compound C2 and a thermoplastic compound C1 will be described hereinbelow for illustration purposes only. These samples were measured for Shore A hardness according to the well-known ISO 868 standard.

As a non-limiting example, the elastomer compound C2 is a SEBS and the thermoplastic compound C is a polypropylene (PP). Nevertheless, it shall be understood that any other elastomeric compound C2 and/or thermoplastic compound C1 may be used without departure from the scope of the invention, as defined by the annexed claims.

The weight percentages indicated in the table below are weight percentages based on the total weight of the sum of the elastomer compound and the thermoplastic compound (C2 + C1). The weight percentage of the sum of the elastomer compound and the thermoplastic compound (C1 + C2) based on the weight of the second polymer material B is identical in all samples. The weight percentage of the sum of the elastomer compound and the thermoplastic compound (C1 + C2) based on the weight of the second polymer material B is identical in all samples.

| | **C1 compound %** | **C2 compound %** | **Sh A hardness** |
|---|---|---|---|
| **Samp 1** | 50 | 50 | 96 |
| **Samp 2** | 40 | 60 | 83 |
| **Samp 3** | 30 | 70 | 74 |
| **Samp 4** | 25 | 75 | 70 |
| **Samp 5** | 20 | 80 | 64 |
| **Samp 6** | 10 | 90 | 57 |

"Samp 1" designates a first sample of a second polymer material B comprising 50% of the elastomer compound C2 and 50% of the thermoplastic compound C1. The results show that this first sample has an unacceptably high Shore A hardness (96) for the purposes hereof.

"Samp 2" designates a second sample of a second polymer material B comprising 40% of the elastomer compound C2 and 60% of the thermoplastic compound C1. The results show that this second sample has an acceptable Shore A hardness (83) for the purposes hereof.

Without being bound to any theory, it can be established that a polymer material free of liquid plasticizer agents having a Shore A hardness of more than 85 does not fall within the scope of this invention.

Without being bound to any theory, it can be established that a polymer material free of liquid plasticizer agents in which the elastomer compound C2 has a weight percentage of less than 55% with respect to the sum of the thermoplastic compound and the elastomer compound (C1 + C2), does not fall within the scope of this invention.

"Samp 3" designates a third sample of a second polymer material B comprising 30% of the elastomer compound C2 and 70% of the thermoplastic compound C1.

The results show that this third sample has a good Shore A hardness (74) for the purposes hereof.

"Samp 4" designates a fourth sample of a second polymer material B comprising 25% of the elastomer compound C2 and 75% of the thermoplastic compound C1. The results show that this fourth sample has a very good Shore A hardness (70) for the purposes hereof.

"Samp 5" designates a fifth sample of a second polymer material B comprising 20% of the elastomer compound C2 and 80% of the thermoplastic compound C1. The results show that this fifth sample has an acceptable Shore A hardness (64) for the purposes hereof.

"Samp 6" designates a sixth sample of a second polymer material B comprising 10% of the elastomer compound C2 and 90% of the thermoplastic compound C1. The results show that this sixth sample has an unacceptably low Shore A hardness (57) for the purposes hereof.

Without being bound to any theory, it can be established that a polymer material free of liquid plasticizer agents having a Shore A hardness of less than 60 does not fall within the scope of this invention.

Without being bound to any theory, it can be established that a polymer material free of liquid plasticizer agents in which the elastomer compound C2 has a weight percentage of more than 85 % with respect to the sum of the thermoplastic compound and the elastomer compound (C1 + C2), does not fall within the scope of this invention.

Advantageously, the first polymer material A of the outer protective layer 2 may include a UV filter E, preferably selected from the group comprising titanium oxide, silica, carbon black, zinc oxide or the like.

Preferably, the filter E will be present in a weight percentage of 0.1% to 10% based on the total weight of the first polymer material A.

It shall be understood that both the first polymer material A and the second polymer material B may have whichever compositions, possibly similar compositions, and particularly the first polymer material A may include a thermoplastic compound C1 and/or an elastomer compound C2 and the second polymer material B may include a filter E, in any weight percentages, possibly similar, without departure from the scope of the invention as defined by the annexed claims.

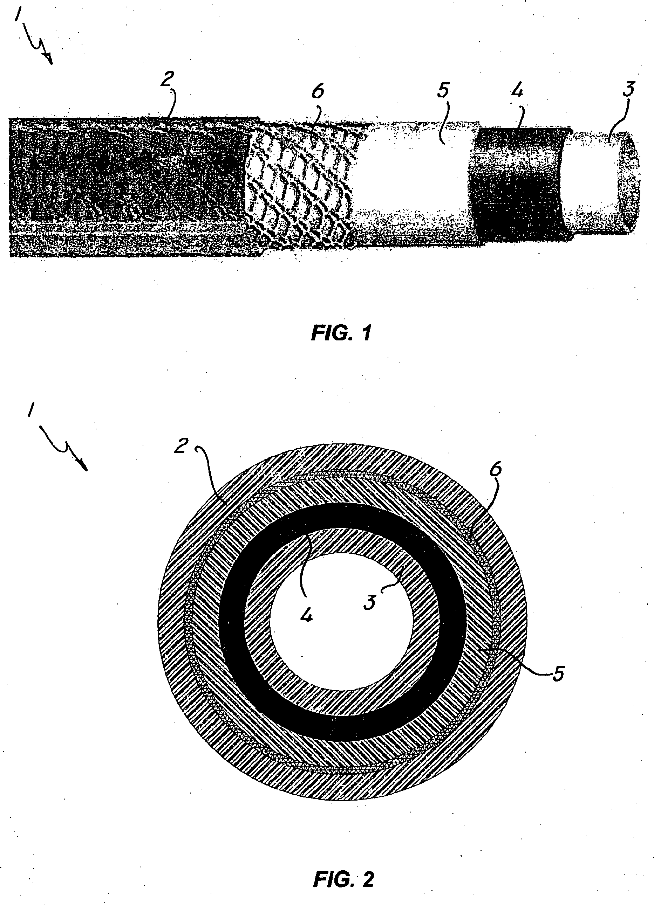

In addition to intermediate layer (6), the hose 1 may have additional intermediate layers, designated in FIGS. 1 and 2 by numerals 4, and 5. Nevertheless, it shall be understood that any other layer may be interposed between the outer layer 2 and the inner layer 3 without departure from the scope of the invention, as defined by the annexed claims.

The intermediate layer 4 may be formed from a third polymer material F, which may be identical to the second polymer material B and include a dark coloring agent G, preferably of the carbon black type, for preventing algal bloom within the hose, in a weight percentage of 0.1% to 10% based on the weight of the third polymer material F.

The layer 5 may be similar to the inner layer 3, and be thus formed from a fourth polymer material H similar to the second polymer material B.

The fibrous reinforcement layer 6 may have a spiral wrapped or mesh form with simple or double chain stitches, and be formed in accordance with the teachings of patents EP-B1-0623776 or EP-B1-0960297, by the Applicant hereof.

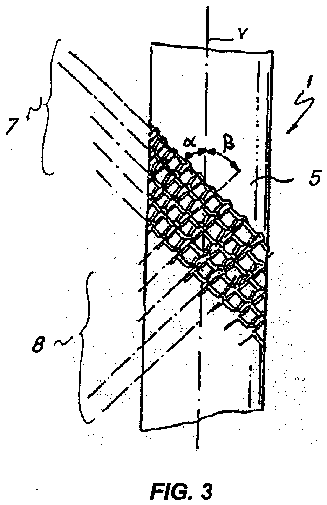

Particularly, as shown in FIG. 3, the chain-mesh fibrous layer 6 may have substantially parallel rows of stitches 7 and substantially parallel lines of stitches 8.

Advantageously, the lines 8 and the rows 7 of stitches may be mutually inclined with respect to the longitudinal axis Y of the hose, at respective predetermined angles. α, β.

In operation, the hose may be formed using well-known techniques, such as coextrusion.

In the light of the foregoing, it clearly appears that the hose of the invention fulfills the intended objects and particularly meets the requirement of providing a flexible hose of thermoplastic material free of liquid plasticizer agents, which has a good flexibility.

Thanks to the nearly complete replacement of liquid plasticizer agents with a sufficient amount of elastomer compound C2 to impart a Shore A hardness of less than 85 to the second polymer material, the long-felt prior art need for a flexible hose formed from an elastomer material free of liquid plasticizer agents can be fulfilled.

The hose according to the invention is susceptible of a number of changes and variants, within the inventive concept disclosed in the appended claims. All the details thereof may be replaced by other technically equivalent parts, and the materials may vary depending on different needs, without departure from the scope of the invention.

While the hose has been described with particular reference to the accompanying figures, the numerals referred to in the disclosure and claims are only used for the sake of a better intelligibility of the invention and shall not be intended to limit the claimed scope in any manner.

## Claims

1. A flexible hose comprising:
- at least one outer protective layer (2) of a first flexible polymer material (A);
- at least one inner layer (3) of a second flexible polymer material (B) in direct contact with the fluid to be transported;
- a fibrous reinforcement layer (6) interposed between said outer layer (2) and said inner layer (3);
wherein said second polymer material (B) comprises a polyolefin thermoplastic compound (C1) and an elastomer compound (C2) in such a weight percentage as to impart a Shore A hardness of 60 to 85 to said second polymer material (B),
**characterized in that** said second polymer material (B) is selected from the group of polymer materials substantially free of liquid plasticizer agents in order to avoid pollution and/or contamination of the transported liquid and/or the surrounding environment and to render the hose suitable for transporting food liquids, and further
**characterized in that** said second polymer material (B) is selected from the group consesting of chloride-free polymer materials.

2. Hose as claimed in claim 1, **characterized in that** said second polymer material (B) has a Shore A hardness close to 70.

3. Hose as claimed in claim 1 or 2, **characterized in that** said elastomer compound (C2) is present in said second polymer material (B) in a weight percentage of 55% to 85%, preferably close to 75%.

4. Hose as claimed in one or more of the preceding claims, **characterized in that** said elastomer compound (C2) is selected from the group comprising SEBS, SEPS, EPDM, polyolefin elastomers.

5. Hose as claimed in one or more of the preceding claims, **characterized in that** said thermoplastic compound (C1) is present in a weight percentage of 45% to 15%, and preferably close to 25%.

6. Hose as claimed in one or more of the preceding claims, **characterized in that** said polyolefin thermoplastic compound (C1) is selected from the group comprising polypropylenes, polyethylenes or the like.

7. Hose as claimed in one or more of the preceding claims, **characterized in that** said first polymer material (A) of said outer protective layer (2) comprises a UV filter (E).

8. Hose as claimed in claim 7, **characterized in that** said filter (E) is selected from the group comprising titanium oxide, silica, carbon black, zinc oxide.

9. Hose as claimed in claim 7 or 8, **characterized in that** said filter (E) may be present in a weight percentage of 0,1 to 10% relative to the total weight of said first polymer material (A).

10. Hose as claimed in one or more of the preceding claims, **characterized in that** it further has an intermediate layer (4) of a third flexible polymer material (F) interposed between said outer protective layer (2) and said inner layer (3), said third polymer material (F) comprises a dark coloring agent (G) for preventing algal bloom within the hose.

11. Hose as claimed in claim 10, **characterized in that** said coloring agent (G) is of the carbon black type.

12. Hose as claimed in claim 10 or 11, **characterized in that** the carbon black coloring agent content is from 0.1% to 10% by weight.

13. Hose as claimed in one or more of the preceding claims, **characterized in that** said fibrous reinforcement layer (6) has a spiral wrapped or mesh form with simple or double chain stitches.

14. Hose as claimed in claim 13, **characterized in that** said chain-mesh fibrous layer (6) has substantially parallel rows of stitches (7) and/or substantially parallel lines of stitches (8), said lines of stitches (8) and said rows of stitches (7) are mutually inclined with respect to the longitudinal axis (Y) of the hose, at respective predetermined angles (α, β).

## Patentansprüche

1. Flexibler Schlauch mit
- mindestens einer äußeren Schutzschicht (2) aus einem ersten flexiblen Polymermaterial (A);
- mindestens einer inneren Schicht (3) aus einem zweiten flexiblen Polymermaterial (B), das in direktem Kontakt mit der zu fördernden Flüssigkeit ist;
- einer faserigen Verstärkungsschicht (6), die zwischen der äußeren Schicht (2) und der inneren Schicht (3) angeordnet ist,
wobei das zweite Polymermaterial (B) eine polyolefine thermoplastische Verbindung (C1) und eine elastomere Verbindung (C2) umfasst mit solchen Gewichtsanteilen, dass diesem zweiten Polymermaterial (B) eine Shore A Härte von 60 bis 85 aufgeprägt ist,
**dadurch gekennzeichnet, dass** dieses zweite Polymermaterial (B) aus der Gruppe der Polymermaterialien ausgewählt ist, die im wesentlichen frei ist von flüssigen Weichmachern, um Verschmutzung und/oder Verunreinigung der geförderten Flüssigkeit und/oder der umgebenden Umwelt zu verhindern und um den Schlauch geeignet zu machen für die Förderung von flüssigen Nahrungsmitteln, und zudem
**dadurch gekennzeichnet, dass** das zweite Polymermaterial (B) aus der Gruppe ausgewählt ist, die aus Polyvinylchloridfreien Polymermaterialien besteht.

2. Schlauch gemäß Anspruch 1, **dadurch gekennzeichnet, dass** das zweite Polymermaterial (B) eine Shore A Härte von nahezu bis 70 hat.

3. Schlauch gemäß Anspruch 1 oder 2, **dadurch gekennzeichnet, dass** die elastomere Verbindung (C2) in diesem zweiten Polymermaterial (B) mit Gewichtsanteilen von 55% bis 85%, vorzugsweise nahe bei 75% enthalten ist.

4. Schlauch gemäß einem oder mehrerer der vorhergehenden Ansprüche, **dadurch gekennzeichnet, dass** die elastomere Verbindung (C2) ausgewählt ist aus der Gruppe mit SEBS, SEPS, EPDM, polyolefine Elastomere.

5. Schlauch gemäß einem oder mehrerer der vorhergehenden Ansprüche, **dadurch gekennzeichnet, dass** die thermoplastische Verbindung (C1) mit Gewichtsanteilen von 45% bis 15%, vorzugsweise nahe bei 25% enthalten ist.

6. Schlauch gemäß einem oder mehrerer der vorhergehenden Ansprüche, **dadurch gekennzeichnet, dass** die polyolefine thermoplastische Verbindung (C1) ausgewählt ist aus der Gruppe mit Polypropylenen, Polyethylenen oder ähnlichem.

7. Schlauch gemäß einem oder mehrerer der vorhergehenden Ansprüche, **dadurch gekennzeichnet, dass** das erste Polymermaterial (A) der äußeren Schutzschicht (2) einen UV-Filter (E) aufweist.

8. Schlauch gemäß Anspruch 7, **dadurch gekennzeichnet, dass** der Filter (E) ausgewählt ist aus der Gruppe mit Silika, Kohlenstoff, Zinkoxid.

9. Schlauch gemäß Anspruch 7 oder 8, **dadurch gekennzeichnet, dass** der Filter (E) mit Gewichtsanteilen von 0,1 bis 10% relativ zum Gesamtgewicht des ersten Polymermaterials (A) enthalten ist.

10. Schlauch gemäß einem oder mehrerer der vorhergehenden Ansprüche, **dadurch gekennzeichnet, dass** zudem eine Zwischenschicht (4) aus einem dritten flexiblen Polymermaterial (F) vorgesehen ist, die zwischen der äußeren Schutzschicht (2) und der inneren Schicht (3) angeordnet ist, wobei das dritte Polymermaterial (F) einen dunkel färbenden Zusatz (G) enthält, der das Entstehen von Algen im Schlauch verhindern soll.

11. Schlauch gemäß Anspruch 10, **dadurch gekennzeichnet, dass** der färbende Zusatz (G) kohlenstoffartig ist.

12. Schlauch gemäß Anspruch 10 oder 11, **dadurch gekennzeichnet, dass** der dunkel färbende Zusatz (G) einen Gewichtsanteil von 0,1 bis 10% hat.

13. Schlauch gemäß einem oder mehrerer der vorhergehenden Ansprüche, **dadurch gekennzeichnet, dass** die faserige Verstärkungsschicht (6) eine gehüllte Spirale oder Maschenform mit einfachen oder doppelten Kettenstichen aufweist.

14. Schlauch gemäß Anspruch 13, **dadurch gekennzeichnet, dass** die ketten-maschen-faserige Schicht (6) im wesentlichen parallele Reihen von Stichen (7) und/oder im wesentlichen parallele Linien von Stichen (8) aufweist, wobei die Linien von Stichen (8) und die Reihen von Stichen (7) gegenseitig geneigt sind relativ zu der Longitudinalen Achse (Y) des Schlauchs mit jeweils vorbestimmten Winkeln (α, β).

## Revendications

1. Tuyau souple, comprenant:
- au moins une couche protectrice extérieure (2) faite d'une première matière polymère souple (A);
- au moins une couche intérieure (3) faite d'une seconde matière polymère souple (B) en contact direct avec le fluide à transporter;
- une couche de renforcement fibreuse (6) interposée entre ladite couche extérieure (2) et ladite couche intérieure(3);
dans lequel ladite seconde matière polymère (B) comprend un composé thermoplastique polyoléfinique (C1) et un composé élastomère (C2) en un pourcentage en poids apte à donner à ladite seconde matière polymère (B) une dureté Shore A de 60 à 85,
**caractérisé en ce que** ladite seconde matière polymère (B) est choisie dans le groupe de matières polymères sensiblement exemptes d'agents plastifiants liquides afin d'éviter la pollution et/ou la contamination du liquide transporté et/ou de l'environnement voisin et afin de rendre le tuyau apte à transporter des liquides alimentaires, et en outre
**caractérisé en ce que** ladite seconde matière polymère (B) est choisie dans le groupe consistant des matières polymères exemptes de polychlorure de vinyle.

2. Tuyau selon la revendication 1, **caractérisé en ce que** ladite seconde matière polymère (B) a une dureté Shore A proche de 70.

3. Tuyau selon la revendication 1 ou 2, **caractérisé en ce que** ledit composé élastomère (C2) est présent dans ladite seconde matière polymère (B) en un pourcentage en poids de 55 % à 85 %; de préférence proche de 75 %.

4. Tuyau selon une ou plusieurs des revendications précédentes, **caractérisé en ce que** ledit composé élastomère(C2) est choisi dans le groupe comprenant SEBS, SEPS, EPDM, des élastomères polyoléfiniques.

5. Tuyau selon une ou plusieurs des revendications précédentes, **caractérisé en ce que** ledit composé thermoplastique (C1) est présent en un pourcentage en poids de 45 % à 15 % et de préférence proche de 25 %.

6. Tuyau selon une ou plusieurs des revendications précédentes, **caractérisé en ce que** le composé thermoplastique polyoléfinique (C1) est choisi dans le groupe comprenant des polypropylènes, polyéthylènes ou analogues.

7. Tuyau selon une ou plusieurs des revendications précédentes, **caractérisé en ce que** ladite première matière polymère (A) de ladite couche protectrice extérieure (2) comprend un filtre UV (E).

8. Tuyau selon la revendication 7, **caractérisé en ce que** ledit filtre (E) est choisi dans le groupe comprenant l'oxyde de titane, la silice, le noir de carbone, l'oxyde de zinc.

9. Tuyau selon la revendication 7 ou 8, **caractérisé en ce que** ledit filtre (E) peut être présent en un pourcentage en poids de 0,1 à 10 % relativement au poids total de ladite première matière polymère (A).

10. Tuyau selon une ou plusieurs des revendications précédentes, **caractérisé en ce qu'**il possède en outre une couche intermédiaire (4) faite d'une troisième matière polymère souple (F) interposée entre ladite couche protectrice extérieure (2) et ladite couche intérieure (3), ladite troisième matière polymère (F) comprenant un agent colorant foncé (G) destiné à prévenir la prolifération des algues dans le tuyau.

11. Tuyau selon la revendication 10, **caractérisé en ce que** ledit agent colorant (G) est du type du noir de carbone.

12. Tuyau selon la revendication 10 ou 11, **caractérisé en ce que** la teneur de l'agent colorant en noir de carbone est de 0,1 à 10 % en poids.

13. Tuyau selon une ou plusieurs des revendications précédentes, **caractérisé en ce que** ladite couche de renforcement fibreuse (6) a une forme enroulée en hélice ou à mailles à points de chaînette simples ou doubles.

14. Tuyau selon la revendication 13, **caractérisé en ce que** ladite couche fibreuse (6) à mailles à points de chaînette possède des rangées de points (7) sensiblement parallèles et/ou des lignes de points (8) sensiblement parallèles, lesdites lignes de points (8) et lesdites rangées de points (7) étant mutuellement inclinées par rapport à l'axe longitudinal (Y) du tuyau, selon des angles respectifs prédéterminés (α, β).
